# EUROPÄISCHE PATENTSCHRIFT

(11) **EP 3 612 743 B1**
(45) Veröffentlichungstag und Bekanntmachung des Hinweises auf die Patenterteilung: **28.12.2022**
(21) Anmeldenummer: 18716159.1
(22) Anmeldetag: 28.03.2018
(51) Int. Cl.: F16C 19/18, F16C 33/78

(54) **GETRIEBEANORDNUNG MIT AXIALEN KIPPSEGMENTEN**
TRANSMISSION ASSEMBLY COMPRISING AXIAL TILT SEGMENTS
MÉCANISME DE TRANSMISSION COMPORTANT DES PATINS OSCILLANTS AXIAUX

(30) Priorität: 20.04.2017 DE 102017206680
(43) Veröffentlichungstag der Anmeldung: 26.02.2020
(73) Patentinhaber: ZF Friedrichshafen AG, 88046 Friedrichshafen (DE); ZF Wind Power Antwerpen N.V., 3920 Lommel (BE)
(72) Erfinder: KUTLUAY, Ümit, 88048 Friedrichshafen (DE); KRIECKEMANS, Koen, 2200 Noorderwijk (BE); BERKMANS, Yvan, 3940 Hechtel-Eksel (BE); GOOVAERTS, Michel, 2235 Hulshout (BE); BOGAERT, Roger, 9200 Dendermonde (BE); OOMS, Maarten, 2440 Geel (BE)
(74) Vertreter: ZF Friedrichshafen AG
(86) Internationale Anmeldenummer: PCT/EP2018/057847
(87) Internationale Veröffentlichungsnummer: WO 2018/192756

(56) Entgegenhaltungen:
- EP-A1- 2 383 480
- EP-A1- 2 955 413
- WO-A1-2007/025117
- DE-A1- 4 213 992
- DE-A1- 4 343 965

## Beschreibung

Die vorliegende Erfindung betrifft eine Getriebeanordnung mit einem Planetenradsatz und axialen Kippsegmenten, welche insbesondere bei Getrieben von Windkraftanlagen verwendet wird. Des Weiteren betrifft die vorliegende Erfindung ein Verfahren zur Montage einer erfindungsgemäßen Getriebevorrichtung.

Aus dem Stand der Technik, beispielsweise aus WO 2011/069666 A1, ist bekannt, Axialkippsegmente zur axialen Abstützung von rotierbaren Bauteilen vorzusehen. Vorliegend weist eine Bodenplatte den Axialkippsegmenten zugeordnete Durchbrechungen auf, die jeweils einen elastisch verformbaren Kragbalken bilden, der mit seinem freien Ende eine Abstützfläche für die Abstützung des zugeordneten Axialkippsegmentes bildet. Durch die elastisch verformbaren Tragbalken wird eine lokale Nachgiebigkeit der Abstützflächen für die Abstützung der zugeordneten Axialkippsegmente erreicht, durch die es möglich ist, eine ungleichmäßige Lastverteilung über den Axiallagergleitflächen zu kompensieren.

Aus der EP2383480 A1 ist eine Getriebeanordnung nach dem Oberbegriff des Anspruchs 1 bekannt.

Der vorliegenden Erfindung liegt die Aufgabe zu Grunde, eine Kippsegmentlagerung zur axialen Abstützung vorzuschlagen, welche einerseits effektiv eine axiale Abstützung gewährleistet und gleichzeitig einfach zu montieren ist.

Die Aufgabe wird mit dem Gegenstand des Patentanspruchs 1 gelöst. Technische Weiterbildungen und vorteilhafte Ausgestaltungen gehen aus den abhängigen Ansprüchen hervor. So weist die Getriebeanordnung einen Planetenradsatz mit einem Sonnenrad, Planetenrädern und einem Hohlrad auf. Die Planetenräder sind drehbar auf einem Planetenbolzen gelagert. Besonders vorteilhaft handelt es sich bei der Lagerung um eine Gleitlagerung bzw. ein Gleitlager. Hierfür kann insbesondere eine (Gleit-) Lagerbuchse, beispielsweise aus einer Messinglegierung, an dem Planetenbolzen vorgesehen werden. Die Lagerbuchse kann jedoch aus anderen Metallen, Metalllegierungen oder auch aus geeigneten Kunststoffen hergestellt sein. Der Planetenbolzen ist mit einem Planetenträger verbunden, wobei der Planetenträger einteilig oder mehrteilig, insbesondere aus zwei symmetrischen Halbteilen bestehen kann.

Die Verzahnungen der Planetenräder stehen einerseits mit der Verzahnung des Hohlrads und andererseits mit der Verzahnung des Sonnenrads in Eingriff. Häufig handelt es sich bei der Verzahnung um eine sogenannte Schrägverzahnung. Daraus resultierende und auf den Planetenradsatz wirkende Axialkräfte neutralisieren sich in Summe idealerweise, erzeugen jedoch mitunter ein Kippmoment auf die Planetenräder um die Planetenachse.

Dem wirken Kippsegmente entgegen, welche an dem Planetenträger vorgesehen werden, wobei die Kippsegmente jeweils auf der den Planetenrädern zugewandten Seite des Planetenträgers angeordnet sind. Dabei ist eine in Bezug auf den jeweiligen Planetenbolzen radial umlaufende Anordnung mehrerer Kippsegmente je Planetenträgerseite vorgesehen. Die Kippsegmente agieren somit als Distanzstücke und nehmen axiale Kräfte auf, um insbesondere einer Verkippung der Planetenräder entgegenzuwirken. Es kann eine gerade oder aber auch ungerade Anzahl an Kippsegmenten je Planetenträgerseite vorgesehen werden. Es kann weiter vorgesehen sein, dass die Kippsegmente permanent mit den Planetenrädern in Kontakt stehen, um auch eine minimale Verkippung zu verhindern bzw. von außen einwirkende Axialkräfte abzustützen. In weiteren vorteilhaften Ausführungen existiert zwischen Planetenrad und Kippsegmenten ein, wenn auch minimaler, Luft- und/oder Schmierspalt. Erst bei Auftreten einer Verkippung kommt es zu einer teilweisen oder vollständigen Anlage eines oder mehrerer Kippsegmente an das verkippte Planetenrad.

Der Planetenträger weist Ausnehmungen auf, welche zur Aufnahme zumindest eines Teils der Kippsegmente geeignet sind. Bei der Ausnehmung handelt es sich um eine Vertiefung, beispielsweise eine durchgehende Bohrung oder bevorzugt ein Sackloch. Die Kippsegmente werden von den Ausnehmungen nicht vollumfänglich aufgenommen, sondern ragen seitlich aus diesen hervor, bzw. stehen von den Planetenträgerwangen in Richtung der Planetenräder ab. So kann bei Bedarf eine Kontaktfläche bereitgestellt werden.

Die Kippsegmente verfügen über einen Korpus mit einer Gleitfläche auf einer ersten Seite und einem Schaft auf einer zweiten Seite. Die erste Seite und die zweite Seite sind einander gegenüberliegend angeordnet. Die

Kippsegmente weisen eine zylindrische Kontur mit einem ersten Durchmesser auf, und der Schaft ebenfalls eine zylindrische Kontur mit einem zweiten Durchmesser auf. Der erste Durchmesser ist größer als der zweite Durchmesser. Hieraus ergibt sich im Querschnitt eine T-förmige Kontur der Kippsegmente. Zylindrisch bedeutet in diesem Zusammenhang, dass die erste und zweite Seite eine kreisrunde oder zumindest annähernd runde Grundfläche aufweisen.

Die erste Seite dient als Anlagefläche an den Planetenrädern, wohingegen der Schaft bzw. das freie Ende orthogonal zu der ersten bzw. zweiten Seite angeordnet ist und zumindest teilweise in die korrespondierende Ausnehmung hereinragt. Insbesondere ragt das freie Ende nicht vollständig in die Ausnehmung hinein, damit zwischen der zweiten Seite des Kippsegments und dem Planetenträger ein Spalt verbleibt, um eine Flexibilität hinsichtlich einer tangentialen Auslenkung zu gewährleisten. Dies wäre nicht gegeben, wenn die Kippsegmente ebenfalls flächig, mit der den Planetenrädern abgewandten Seite an dem Planetenträger anlägen.

Weiter vorteilhaft können die Kippsegmente auf einer dem freien Ende zugewandten Seite eine umlaufende Nut aufweisen. Diese eignet sich in besonderer Weise zur Aufnahme eines Sicherungselements. Bei dem Sicherungselement handelt es sich beispielsweise um einen O-Ring oder einen Spreizring, welcher über den Umfang des freien Endes hinausragt und an den Seitenwänden der Ausnehmungen zur Anlage kommt. Das Sicherungselement wird in die jeweilige Ausnehmung gequetscht bzw. darin gestaucht. Hierdurch wird eine Klemmwirkung erzeugt, welche insbesondere ein Herausfallen des Kippsegments, vor allen Dingen bei der Montage oder aber auch Wartung und Demontage, verhindert. Gleichzeitig bleibt die Flexibilität zum Ausgleich einer tangentialen Auslenkung erhalten. Das Sicherungselement kann aus Kunststoff, Gummi oder Metall hergestellt sein, vorteilhaft handelt es sich um einen (bedingt) nachgiebigen Werkstoff im Vergleich zu den Kippsegmenten bzw. dem Planetenträger.

Vorteilhaft wird zwischen dem freien Ende, also dem Schaft des Kippsegments, und der Ausnehmung eine Spielpassung vorgesehen, um in einem vorgegebenen Umfang Ausgleichs- und Relativbewegungen der Bauteile zueinander zu ermöglichen.

Die Kippsegmente weisen auf der ersten Seite eine (Gleit-) Beschichtung, welche einen geringen Reibwiderstand zwischen Kippsegment und Planetenrad bei gleichzeitig geringem Verschleiß gewährleistet. Insbesondere kann die Beschichtung aus Weißmetall oder Bronze hergestellt sein, aber auch in Form einer Hartstoffdünnschicht aus Wolfram-Carbid (WC/C) oder einem harten diamantähnlichem Kohlenstoff (DLC = "Diamond-Like Carbon") beziehungsweise aus Kunststoff vorliegen. Weiter eignen sich poröse Sinterwerkstoffe, insbesondere Keramiken. Bei Vorsehen einer Beschichtung auf der ersten Seite besteht der Korpus der Kippsegmente aus einem anderen Material, beispielsweise aus Stahl.

In alternativen Ausführungen können die Kippsegmente auch aus einem geeigneten Gleitlagervollmaterial bestehen, sodass eine Beschichtung im Bereich der Gleitkontaktfläche entfällt. Auch sind Ausführungen denkbar, bei denen der gesamte Korpus der Kippsegmente mit einer zuvor beschriebenen Beschichtung versehen ist. Idealerweise wird bei einem Gleitlager durch das Bereitstellen einer ausreichenden Schmiermittelversorgung sichergestellt, dass zwischen Planetenlager und Kippsegment ein Schmierfilm gebildet wird. Erfolgt jedoch ein Betrieb des Gleitlagers im Mischreibungsgebiet, wie es bei Windkraftanlagen bei Ein- & Auslaufvorgängen öfter vorkommen kann, wird ein vollständig trennender Schmierfilm nicht mehr ausgebildet, sodass die Oberflächen von Kippsegment und Planetenrad in Kontakt treten. In diesen Fällen kann eine weiche Weißmetallschicht verschleißen und Riefen bilden, das weichere Material (einer Beschichtung) wird somit auf Dauer abgetragen. Daher eigenen sich harte Beschichtungen für den Betrieb in der Mischreibung in besonderer Weise, da sie praktisch nicht verschleißen. Die harte Oberfläche ist formstabil und behält aufgrund der hohen Verschleißfestigkeit seine Mikrogeometrie.

Zusätzlich ertragen harte Beschichtungen eine deutlich höhere Flächenbelastung als weiches Weißmetall, sodass die kraftübertragende Gesamtfläche der Kippsegmente reduziert werden kann. Dies kann durch eine geringere Anzahl an Kippsegmenten oder kleineren Kippsegmentdurchmessern erreicht werden.

Die Hartstoffdünnschicht wird mittels eines PVD-Verfahrens aufgetragen, wobei PVD eine Beschichtung mittels physikalischer Gasphasenabscheidung (Physical Vapour Deposition = PVD) beschreibt. Durch das gleichzeitige Vorsehen einer Vielzahl an Segmenten in der Beschichtungskammer, beispielsweise auf einem Träger, sinken die Herstellungskosten erheblich.

Gemäß einer Weiterbildung der vorliegenden Erfindung ist zwischen dem jeweiligen Kippsegment und dem Planetenträger jeweils ein Federelement vorgesehen. Bei dem Federelement handelt es sich beispielsweise um eine Tellerfeder, durch welche das freie Ende hindurchragt und welche einerseits auf der dem Planetenrad abgewandten Seite des betreffenden Kippsegments und andererseits auf der dem Planetenrad zugewandten Seite des Planetenträgers zur Anlage kommt. Das Federelement bewirkt einerseits, dass die Kippsegmente in einem unbelasteten Zustand nicht in eine Schiefstellung gelangen. Andererseits wird bei Vorliegen einer Belastung, also einer Verkippung des Planetenrads, gewährleistet, dass die Kippsegmente mit einer möglichst großen (Gleit-) Fläche an dem Planetenrad anliegen und gehalten werden. Die Vermeidung einer Schiefstellung der Kippsegmente ist insbesondere bei der Montage von großer Bedeutung, da eine gerade (d.h. parallel zum Planetenträger) Ausrichtung der Gleitflächen der Kippsegmente die Montage deutlich erleichtert und gleichzeitig die Umsetzung von geringen Bauteiltoleranzen ermöglicht. Insbesondere können die Kippsegmente aufgrund des jeweiligen Federelements axial einfedern, also einen axialen Versatz ausgleichen. Die verschiedenen Kippsegmente stehen derart in Wechselwirkung, dass bei einer Verkippung die diametral zum Planetenbolzen angeordneten Kippsegmente in analoger Weise einfedern. Hingegen federt ein Kippsegment aus, wenn ein axial benachbartes Kippsegment einfedert. Weiter vorteilhaft weisen die Kippsegmente an ihren freien Enden eine sich zumindest teilweise verjüngende Kontur auf. Hierunter ist zu verstehen, dass beispielsweise an dem freien Ende eine Fase vorgesehen werden kann, in weiteren Ausgestaltungen ist jedoch auch eine Konische Kontur des freien Endes denkbar. Durch die sich verjüngende Kontur des freien Endes wird die Möglichkeit der Kippsegmente zu Ausgleichsbewegungen verbessert.

Die Kippsegmente weisen auf der ersten Seite eine ballige Kontur auf. Hierdurch wird wirksam das Auftreten von unerwünschtem Kantentragen vermieden. Die ballige Kontur bewirkt ferner, dass auch bei einer Verkippung der Kippsegmente die Pressung bzw. die Druckverteilung symmetrisch um den Punkt des geringsten Abstands zwischen Kippsegment und Planetenrad verteilt ist. Ohne das Vorsehen einer balligen Kontur würde die Pressung bzw. Druckverteilung bei Vorliegen einer Verkippung einseitig zunehmen.

In vorteilhafter Weise kann auf eine separate Schmiermittelzuführung der Kippsegmente verzichtet werden, da durch Schmiermittel, welches aus dem Gleitlager, hier dem Radialgleitlager zwischen Planetenbolzen und Planetenrad, heraustritt, eine ausreichende Schmiermittelversorgung gewährleistet ist.

Kippsegmente mit einer balligen Kontur der Gleitfläche und einer Beschichtung mit einer Hartstoffdünnschicht auf der balligen Kontur eignen sich in besonderer Weise für jegliche Axiallager von rotierbaren Bauteilen, nicht nur für die Verwendung in einem Planetenradsatz zur Abstützung zwischen Planetenträger und Planetenrad.

Der Gegenstand der vorliegenden Erfindung wird anhand der beigefügten Figuren näher beschrieben. Es zeigen:
- Figur 1A:: eine schematische Darstellung einer ersten Ausführungsform der Kippsegmente, sowie deren Anordnung an dem Planetenträger;
- Figur 1B:: eine schematische Darstellung einer zweiten Ausführungsform der Kippsegmente, sowie deren Anordnung an dem Planetenträger;
- Figur 2:: eine stark vereinfachte schematische Darstellung einer erfindungsgemäßen Getriebeanordnung;
- Figur 3:: eine schematische Darstellung eines Lagerelements.

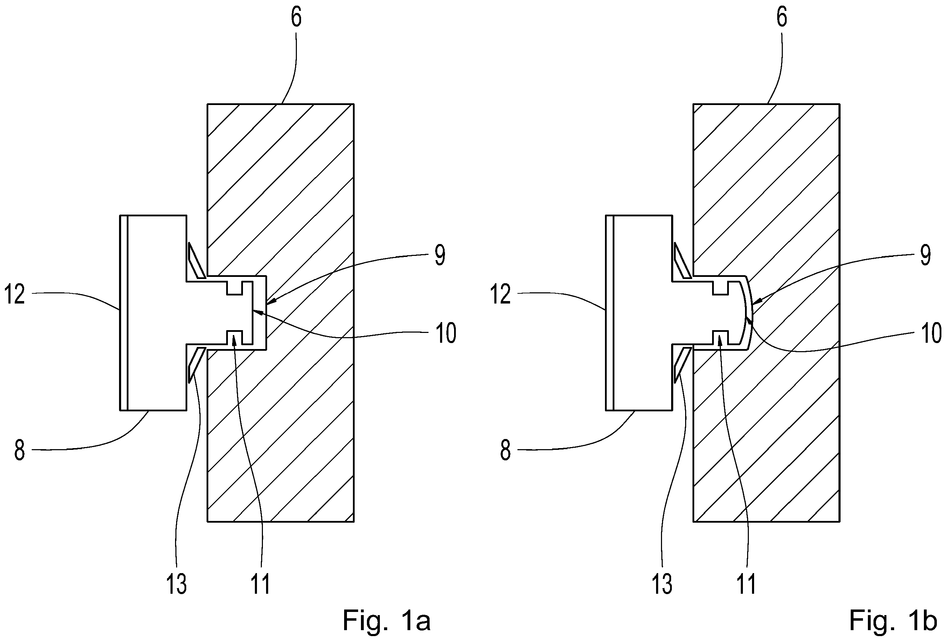

Figur 1A zeig in einer schematischen Darstellung eine erste Ausführungsform der Kippsegmente 8, sowie die Anordnung an einem Planetenträger 6, welcher hier stark vereinfacht nur ausschnittsweise gezeigt ist. Das Kippsegment 8 weist vorliegend bezogen auf den Querschnitt eine T-förmige Kontur auf, wobei ein freies Ende 10 in eine Ausnehmung 9 des Planetenträgers 6 hineinragt. Auf einer, dem freien Ende gegenüberliegenden Seite weist das Kippsegment 8 eine Beschichtung 12 auf, welche als (Gleit-) Fläche an einem Planetenrad 3 anliegt. Die im Querschnitt T-förmige Kontur ist auf eine zylindrische Kontur des Kippsegments 8 mit einem zylindrisch ausgebildeten Schaft zurückzuführen.

Zwischen dem Kippsegment 8 und dem Planetenträger 6 ist weiter ein Federelement 13 angeordnet, welches vorliegend als Tellerfeder ausgebildet ist. Dabei ragt der Schaft bzw. das freie Ende 10 des Kippsegments 8 durch einen Durchlass des Federelements 13 hindurch. Das Federelement 13 kommt einerseits auf einer, dem Planetenträger 6 zugewandten Seite des Kippsegments 8 und andererseits auf einer, dem Planetenrad 3 zugewandten Seite des Planetenträgers 6 zur Anlage.

Zusätzlich weist das Kippsegment 8 an einer, zum freien Ende 10 benachbarten Seite des Schafts eine umlaufende Nut 11 auf. Diese ist zur Aufnahme eines hier nicht gezeigten Sicherungselements, beispielsweise eines O-Rings, vorgesehen. Hierdurch wird das Kippsegment 8 beweglich in der Ausnehmung 9 gehalten, ein Herausfallen aus der Ausnehmung 9 wird jedoch wirksam verhindert. Alternativ zu der Verwendung eines O-Rings könnte auch ein entsprechendes Fixiermedium in die Ausnehmung 9 eingebracht werden, beispielsweise ein flexibler Klebstoff bzw. eine Paste oder ein Fugenmittel. Hierdurch könnten ähnliche Eigenschaften erzielt werden, wie mit einem als O-Ring ausgeführten Sicherungselement. Im Einbauzustand ragt der Schaft bzw. das freie Ende 10 des Kippsegments 8 so weit in die Ausnehmung 9 hinein, dass die umlaufende Nut 11 ebenfalls innerhalb der Ausnehmung 9 angeordnet ist.

Figur 1B eine schematische Darstellung einer zweiten Ausführungsform der Kippsegmente 8, sowie deren Anordnung an dem Planetenträger 6. Der Aufbau ist im Wesentlichen mit der in Figur 1A gezeigten und zuvor beschriebenen Ausführungsform identisch. Unterschiede ergeben sich lediglich in der Kontur des freien Endes 10 des Kippsegments 8 und der korrespondierenden Ausnehmung 9 in dem Planetenträger 6. Das freie Ende 10 weist vorliegend eine ballige Kontur auf, die Ausnehmung 9 hingegen eine tellerförmige Kontur. Dies hat den Vorteil, dass bei Schiefstellungen des Kippsegments 8 durch eine Verkippung des Planetenrads 3 eine größere Kontaktfläche zwischen Kippsegment 8 und Planetenträger 6 bereitgestellt wird, wodurch die eingeleiteten axialen Kräfte besser abgestützt werden können. Auch ist es denkbar, dass lediglich das Kippsegment 8 eine ballige Kontur ausweist, wohingegen die Ausnehmung 9 über eine rechteckige Kontur, wie in Figur 1A gezeigt, verfügt.

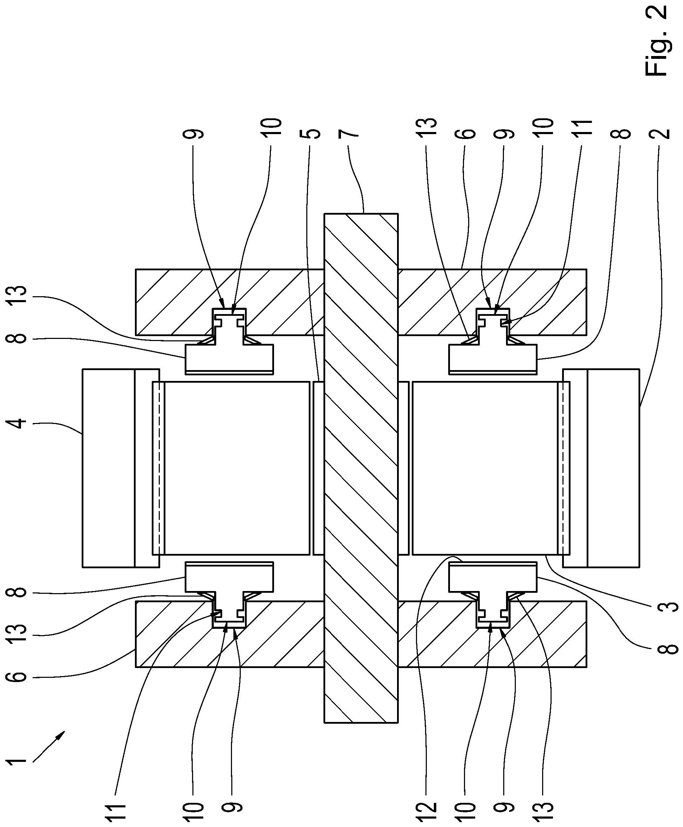

In Figur 2 wird eine stark vereinfachte schematische Darstellung einer erfindungsgemäßen Getriebeanordnung gezeigt. Dabei weist der Planetenradsatz 1 ein Sonnenrad 2, Planetenräder 3 (hier in der vereinfachten Schnitt-Darstellung ein Planetenrad 3) und ein Hohlrad 4 auf. Die Verzahnung der Planetenräder 3 steht dabei mit der Verzahnung von Sonnenrad 2 und Hohlrad 4 in Eingriff, was durch die gestrichelte Linie im Zahneingriffsbereich angedeutet wird.

Zwischen Planetenrad 3 und einem Planetenbolzen 7 ist eine Lagerung 5 angeordnet, wodurch das Planetenrad 3 rotierbar mit dem Planetenbolzen 7 verbunden ist. Vorliegend ist die Lagerung 5 als Gleitlager ausgeführt.

Das Sonnenrad 2 ist bevorzugt mit einer hier nicht gezeigten Welle drehfest verbunden, wobei das Hohlrad 4 bevorzugt mit einem nicht rotierbaren Bauteil, beispielsweise dem Gehäuse, fest verbunden. Prinzipiell sind auch Ausführungen denkbar, bei denen das Hohlrad 4 rotierbar und das Sonnenrad 2 nicht rotierbar in einer Getriebeanordnung vorgesehen sind.

Beidseitig in paralleler Anordnung werden die Planetenräder 3 von dem Planetenträger 6 umgeben. Planetenträger 6 und die Planetenräder 3 sind über den Planetenbolzen 7 miteinander verbunden. Der Planetenträger 6 weist in Bezug auf jedes Planetenrad 3 vier Ausnehmungen 9 auf, zwei auf jeder Seite des entsprechenden Planetenrads 3. Die Ausnehmungen 9 sind paarweise radial beabstandet angeordnet. Dies bedeutet, dass auf jeder Seite jeweils zwei Ausnehmungen diametral zueinander in Bezug auf den Planetenbolzen 7 in dem Planetenträger 6 vorgesehen sind. In die Ausnehmungen 9 sind jeweils Kippsegmente 8 eingebracht, wie sie in den Figuren 1A und 1B zuvor beschrieben wurden. Zwischen den Kippsegmenten 8, genauer gesagt dem Bereich der Beschichtung 12 und dem Planetenrad 3 ist ein Spalt angedeutet. Solange keine Axialkräfte auftreten, welche beispielsweise eine Verkippung des Planetenrads 3 hervorrufen, tritt in der gezeigten Ausführungsform kein Kontakt zwischen Kippsegment 8 und Planetenrad 3 auf. Erst bei einer Verkippung legen sich die Kippsegmente 8 an das Planetenrad 3 an. Alternativ oder zusätzlich können jedoch auch äußere Axialkräfte auftreten, durch welche die Kippsegmente zur Anlage an dem Planetenrad 3 gelangen. In dem gezeigten unbelasteten Zustand sind die Kippsegmente 8 aufgrund des Federelements 13 parallel oder zumindest annähernd mit ihrer (Gleit-) Fläche parallel zu dem Planetenträger 6 bzw. dem Planetenrad 3 ausgerichtet. Durch die bewegliche Anordnung des freien Endes 10 der Kippsegmente 8 werden Ausgleichsbewegungen, insbesondere eine Auslenkung in eine nicht parallele Anordnung zu dem Planetenträger 6 realisierbar. Durch die bewegliche Anordnung der Kippsegmente wird somit insbesondere im Vergleich zu bekannten Lösungen der Axialsicherung mittels einer Anlaufscheibe eine möglichst große und gleichbleibende Kontakt- bzw. Gleitfläche bereitgestellt.

In weiteren, nicht gezeigten Ausführungen der erfindungsgemäßen Getriebeanordnung liegen die Kippsegmente 8 permanent im Bereich der Beschichtung 12 bzw. der dem Planetenrad 3 zugewandten Seite an dem Planetenrad an.

Die Versorgung der Kippsegmente 8 mit Schmiermittel erfolgt durch Schmiermittel, welches aus der Lagerung 5 austritt. Somit ist keine separate Schmiermittelzuführung erforderlich.

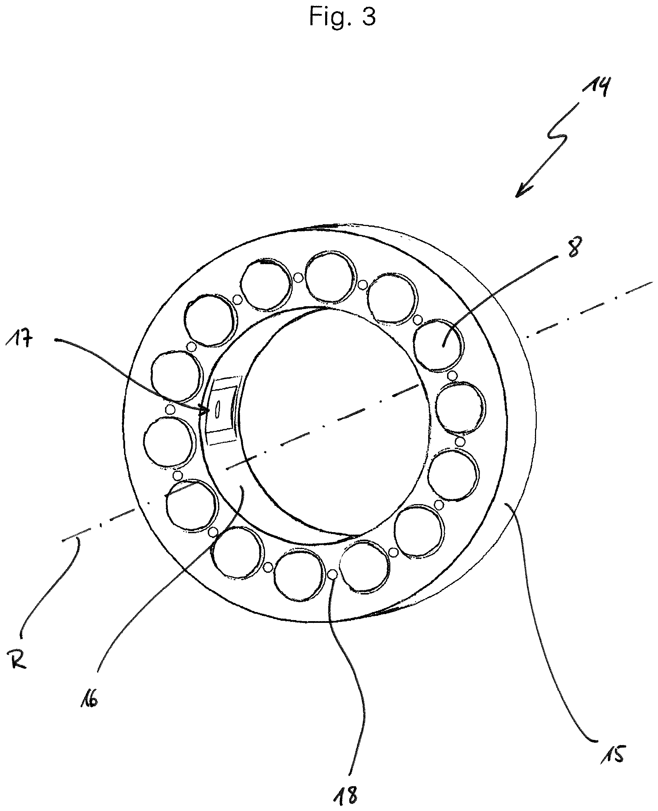

Figur 3 zeigt in einer perspektivischen Darstellung ein Lagerelement 14, wie es beispielsweise bei einem Radialgleitlager Verwendung findet. Dabei verfügt das Lagerelement 14 über einen ringförmigen Korpus 15 mit einem Inne- und einem Außendurchmesser. Entlang des Innendurchmessers ist die Laufbahn 16 des Radialgleitlagers angeordnet. Innerhalb der Laufbahn 16 befindet sich wenigstens eine Ölzufuhr 17, mittels derer dem Radialgleitlager Schmiermittel (Öl) zugeführt wird.

Weiter weist das Lagerelement 14 an einer axialen Stirnseite mehrere Kippsegmente 8 auf. Diese sind radial umlaufend um eine mit Strichpunktlinien dargestellte Rotationsachse R stirnseitig an dem Korpus 15 des Lagerelements 14 angeordnet. Zwischen zwei Kippsegmenten 8 befindet sich dabei jeweils eine Ölzufuhr 18 der Kippsegmente 8, wobei auch die Ölzufuhröffnungen radial umlaufend um die Rotationsachse R angeordnet sind. Hierdurch wird den Kippsegmenten 8 ebenfalls Schmiermittel zugeführt. Durch das Lagerelement 14 mit den stirnseitig angeordneten Kippsegmenten 8 kann neben einer radialen Lagerung auch eine axiale Abstützung von Bauteilen erfolgen, beispielsweise bei Durchbiegung einer Welle aufgrund von auftretenden Lasten.

### Bezuqszeichen

- 1: Planetenradsatz
- 2: Sonnenrad
- 3: Planetenrad
- 4: Hohlrad
- 5: Lagerung
- 6: Planetenträger
- 7: Planetenbolzen
- 8: Kippsegment
- 9: Ausnehmung
- 10: Freies Ende
- 11: Nut
- 12: Beschichtung
- 13: Federelement
- 14: Lagerelement
- 15: Korpus
- 16: Laufbahn Radialgleitlager
- 17: Ölzufuhr Radialgleitlager
- 18: Ölzufuhr Kippsegmente
- R: Rotationsachse

## Patentansprüche

1. Getriebeanordnung einer Windkraftanlage mit einem Planetenradsatz (1), der Planetenradsatz (1) umfassend ein Sonnenrad (2), Planetenräder (3) und ein Hohlrad (4), wobei die Planetenräder (3) jeweils mittels einer Lagerung (5) drehbar auf jeweils einem Planetenbolzen (7) gelagert sind und der jeweilige Planetenbolzen (7) mit einem Planetenträger (6) verbunden ist, wobei an den Planetenrädern (3) zugewandten Seiten des Planetenträgers (6) in Bezug auf den Planetenbolzen radial umlaufend Kippsegmente (8) vorgesehen sind, **dadurch gekennzeichnet, dass** der Planetenträger (6) auf seinen den Planetenrädern (3) zugewandten Seiten radial umlaufend in Bezug auf den Planetenbolzen zu den Kippsegmenten (8) korrespondierende Ausnehmungen (9) zur Aufnahme zumindest eines Teils der Kippsegmente (8) aufweist, wobei die Kippsegmente (8) einen Korpus mit einer Gleitfläche auf einer ersten Seite und einem Schaft auf einer zweiten Seite aufweisen, wobei die erste Seite und die zweite Seite der Kippsegmente (8) einander gegenüberliegend angeordnet sind, und der Schaft ein freies Ende (10) aufweist, mit welchem die Kippsegmente (8) zumindest teilweise in die korrespondierenden Ausnehmungen (9) hineinragen, wobei die Kippsegmente (8) eine zylindrische Kontur mit einem ersten Durchmesser aufweisen, und der Schaft ebenfalls eine zylindrische Kontur mit einem zweiten Durchmesser aufweist, wodurch sich im Querschnitt eine T-förmige Kontur der Kippsegmente (8) ergibt, wobei der erste Durchmesser größer als der zweite Durchmesser ist, wobei die Kippsegmente (8) auf der ersten Seite eine ballige Kontur mit einer mittels PVD-Verfahren aufgebrachten Hartstoffdünnschicht aufweisen.

2. Getriebeanordnung nach Anspruch 1, **dadurch gekennzeichnet, dass** die Kippsegmente (8) an dem Schaft auf einer dem freien Ende (10) zugewandten Seite eine umlaufende Nut (11) zur Aufnahme eines Sicherungselements aufweisen.

3. Getriebeanordnung nach einem der vorherigen Ansprüche, **dadurch gekennzeichnet, dass** zwischen den Kippsegmenten (8) und dem Planetenträger (6) jeweils ein Federelement (13) vorgesehen ist.

4. Getriebeanordnung nach einem der Ansprüche 1 bis 3, **dadurch gekennzeichnet, dass** die Kippsegmente (8) an ihrem freien Ende (10) eine sich zumindest teilweise verjüngende Kontur aufweisen.

5. Getriebeanordnung nach einem der vorherigen Ansprüche, **dadurch gekennzeichnet, dass** die Kippsegmente (8) an ihrem freien Ende (10) eine ballige Kontur aufweisen, welche in tellerförmige Ausnehmungen (9) des Planetenträgers (6) hineinragen.

6. Getriebeanordnung nach einem der vorherigen Ansprüche, **dadurch gekennzeichnet, dass** den Kippsegmente (8) aus der Lagerung (5) heraustretendes Schmiermittel zugeführt wird.

## Claims

1. Transmission assembly of a wind turbine with a planetary gear set (1), the planetary gear set (1) comprising a sun gear (2), planet gears (3) and a ring gear (4), wherein the planet gears (3) are each mounted rotatably on a respective planet journal (7) by means of a bearing (5), and the respective planet journal (7) is connected to a planet carrier (6), wherein tilting segments (8) running radially circumferentially with respect to the planet journal are provided on those sides of the planet carrier (6) which face the planet gears (3), **characterized in that** the sides of the planet carrier (6) which face the planet gears (3) have, radially circumferentially with respect to the planet journal, recesses (9) which correspond to the tilting segments (8) and are intended for receiving at least part of the tilting segments (8), wherein the tilting segments (8) have a body with a sliding surface on a first side and a shaft on a second side, wherein the first side and the second side of the tilting segments (8) are arranged opposite each other, and the shaft has a free end (10) by which the tilting segments (8) project at least partially into the corresponding recesses (9), wherein the tilting segments (8) have a cylindrical contour with a first diameter, and the shaft likewise has a cylindrical contour with a second diameter, as a result of which a T-shaped contour of the tilting segments (8) is produced in cross section, wherein the first diameter is larger than the second diameter, wherein the tilting segments (8) have a spherical contour on the first side with a thin layer of hard material applied by means of PVD.

2. Transmission assembly according to Claim 1, **characterized in that** the shaft of the tilting segments (8), on a side facing the free end (10), has a circumferential groove (11) for receiving a securing element.

3. Transmission assembly according to either of the preceding claims, **characterized in that** a respective spring element (13) is provided between the tilting segments (8) and the planet carrier (6).

4. Transmission assembly according to one of Claims 1 to 3, **characterized in that** the tilting segments (8) at their free end (10) have an at least partially tapering contour.

5. Transmission assembly according to one of the preceding claims, **characterized in that** the tilting segments (8) at their free end (10) have a spherical contour, said contours projecting into plate-like recesses (9) of the planet carrier (6).

6. Transmission assembly according to one of the preceding claims, **characterized in that** lubricant emerging from the bearing (5) is supplied to the tilting segments (8).

## Revendications

1. Mécanisme de transmission d'une éolienne, comprenant un train planétaire (1), le train planétaire (1) comprenant une roue planétaire (2), des satellites (3) et une couronne (4), dans lequel les satellites (3) sont montées rotatifs respectivement au moyen d'un palier (5) sur respectivement un axe de satellite (7), et l'axe de satellite (7) respectif est relié à un porte-satellites (6), dans lequel des patins oscillants (8) sont prévus sur des faces du porte-satellites (6), orientées vers les satellites (3), de manière radialement périphérique par rapport à l'axe de satellite,
**caractérisé en ce que** le porte-satellites (6) présente sur ses faces orientées vers les satellites (3), de manière radialement périphérique par rapport à l'axe de satellite, des évidements (9) correspondant aux patins oscillants (8) pour recevoir au moins une partie des patins oscillants (8), dans lequel les patins oscillants (8) présentent un corps pourvu d'une surface de glissement sur une première face et d'une tige sur une deuxième face, dans lequel la première face et la deuxième face des patins oscillants (8) sont disposées l'une à l'opposé de l'autre, et la tige présente une extrémité libre (10) par laquelle les patins oscillants (8) font saillie au moins partiellement dans les évidements correspondants (9), dans lequel les patins oscillants (8) présentent un contour cylindrique d'un premier diamètre, et la tige présente également un contour cylindrique d'un deuxième diamètre, de façon à produire en section transversale un contour en forme de T des patins oscillants (8), dans lequel le premier diamètre est supérieur au deuxième diamètre, dans lequel les patins oscillants (8) présentent sur la première face un contour bombé pourvu d'une couche mince de substance dure, appliquée au moyen d'un procédé de dépôt en phase vapeur.

2. Mécanisme de transmission selon la revendication 1, **caractérisé en ce que** les patins oscillants (8) présentent au niveau de la tige, sur une face orientée vers l'extrémité libre (10), une rainure périphérique (11) pour recevoir un élément de blocage.

3. Mécanisme de transmission selon l'une quelconque des revendications précédentes, **caractérisé en ce que** respectivement un élément faisant ressort (13) est prévu entre les patins oscillants (8) et le porte-satellites (6).

4. Mécanisme de transmission selon l'une quelconque des revendications 1 à 3, **caractérisé en ce que** les patins oscillants (8) présentent à leurs extrémités libres (10) un contour au moins partiellement effilé.

5. Mécanisme de transmission selon l'une quelconque des revendications précédentes, **caractérisé en ce que** les patins oscillants (8) présentent au niveau de leurs extrémités libres (10) des contours bombés qui font saillie dans des évidements en forme de coupelle (9) du porte-satellites (6).

6. Mécanisme de transmission selon l'une quelconque des revendications précédentes, **caractérisé en ce qu'**un lubrifiant sortant du palier (5) est amené aux patins oscillants (8).
